# EUROPEAN PATENT SPECIFICATION

(11) **EP 1 627 759 B1**
(45) Date of publication and mention of the grant of the patent: **23.09.2009**
(21) Application number: 05017111.5
(22) Date of filing: 05.08.2005
(51) Int. Cl.: B60K 1/00, H01M 8/04

(54) **Drainage structure in a fuel cell electric vehicle**
Abflusssystem in einem Elektrofahrzeug mit einer Brennstoffzelle
Système de drainage dans un véhicule électrique équipé d'une pile à combustible

(30) Priority: 19.08.2004 JP 2004239695; 20.08.2004 JP 2004240700
(43) Date of publication of application: 22.02.2006
(73) Proprietor: Honda Motor Co., Ltd., Tokyo (JP)
(72) Inventor: Horii, Yoshiyuki, Wako-shi Saitama (JP); Watanabe, Junya, Wako-shi Saitama (JP)
(74) Representative: Trossin, Hans-Jürgen

(56) References cited:
- WO-A-20/04021494
- US-A1- 2003 068 543
- US-A1- 2003 155 160
- US-A1- 2004 043 266
- PATENT ABSTRACTS OF JAPAN vol. 2003, no. 12, 5 December 2003 (2003-12-05) -& JP 2004 139817 A (TOYOTA MOTOR CORP), 13 May 2004 (2004-05-13)
- PATENT ABSTRACTS OF JAPAN vol. 1999, no. 04, 30 April 1999 (1999-04-30) -& JP 11 013908 A (NIPPO VALVE:KK), 22 January 1999 (1999-01-22)
- PATENT ABSTRACTS OF JAPAN vol. 015, no. 178 (M-1110), 8 May 1991 (1991-05-08) & JP 03 041231 A (HONDA MOTOR CO LTD), 21 February 1991 (1991-02-21)
- PATENT ABSTRACTS OF JAPAN vol. 2002, no. 03, 3 April 2002 (2002-04-03) -& JP 2001 313056 A (YAMAHA MOTOR CO LTD), 9 November 2001 (2001-11-09)

## Description

The present invention relates to a fuel cell electric vehicle with a drainage structure for exhausting generated water from a fuel cell.

Heretofore, there is a fuel cell electric vehicle for driving a motor for driving the vehicle based upon electric power supplied from a fuel cell in which generated water is exhausted toward the side of the body so that the generated water from the fuel cell is hardly splashed on a driving wheel (for example, refer to JP-A No. 313056/2001). In this vehicle, the generated water is stored in a water tank and water of an amount which overflows from the water tank is exhausted outside the body together with exhaust gas.

A fuel cell vehicle of this is also known from the document US 2003 0068543.

In the above-mentioned conventional type constitution, often, when a stored amount in the water tank exceeds the capacity of the tank, drainage is performed; however, for controlled drainage, the improvement of this point is desired.

In the meantime, considering a case that gas supplied to a fuel cell is high-pressure to some extent, structure that gas emitted from the fuel cell and water generated by the fuel cell are once stored in a storage box, the emission gas is exhausted into the air via a silencer and others after a dilution process is applied, and only the generated water is individually exhausted is desirable.

Then, the invention provides a fuel cell electric vehicle with the features of claim 1 and method according to claim 4 where emission gas from a fuel cell is exhausted into the air via a silencer and generated water from the fuel cell can be moderately exhausted.

According to the configuration, an exhaust pipe provided with a silencer is led out of the storage box separately from the drainage pipe, exhaust gas in the storage box is emitted into the air using the exhaust pipe and only generated water in the storage box can be exhausted using the drainage pipe and at predetermined timing (for example, every predetermined time).

In case the above-mentioned fuel cell electric vehicle is configured as a saddle-ride type vehicle of a motorcycle and others, exhausted generated water is hardly splashed on a foot of an occupant as in the invention according to Claim 2 because drainage is performed at the back of the position of the foot normally located in front of the position of a seat if the scupper is located at the back of the position of the seat of the vehicle.

Besides at this time, in case a side stand (for example, a side stand 38 in the embodiment) for supporting the body in a state inclined on one side is provided and the scupper is arranged on the side on which the side stand is provided as in the invention according to Claim 3, generated water in the drainage pipe is also easily exhausted from the scupper when the body is supported by the side stand in the inclined state while the vehicle is stopped.

According to the invention disclosed in Claim 1, gas emitted from the fuel cell can be exhausted into the air via the silencer and generated water from the fuel cell can be moderately exhausted.

According to the invention disclosed in Claim 2, exhausted generated water can be prevented from being splashed on a foot of an occupant.

According to the invention disclosed in Claim 3, drainability when the vehicle is stopped can be enhanced.

Referring to the drawings, an embodiment of the invention will be described below.
Fig. 1 is a left side view showing a fuel cell electric vehicle (a motorcycle) equivalent to an embodiment of the invention;
Fig. 2 is a right side view showing the fuel cell electric vehicle;
Fig. 3 is a bottom view showing the fuel cell electric vehicle;
Fig. 4 is a block diagram showing a main part of a fuel cell system in the fuel cell electric vehicle;
Fig. 5 is an enlarged view showing a main part in Fig. 1;
Fig. 6 is a right side view showing intake/exhaust members in the fuel cell electric vehicle;
Fig. 7 is a top view showing the intake/exhaust members;
Fig. 8 is a left side view showing a state in which a rider rides on the fuel cell electric vehicle;
Fig. 9 is an enlarged view showing a main part in Fig. 3; and
Fig. 10 is a back view showing the fuel cell electric vehicle.

A direction such as forward, backward, rightward and leftward in the following description shall be the same as a direction in a vehicle unless special description is made. An arrow FR in the drawing indicates the front of the vehicle, an arrow LH indicates the left of the vehicle, and an arrow UP indicates the upside of the vehicle.

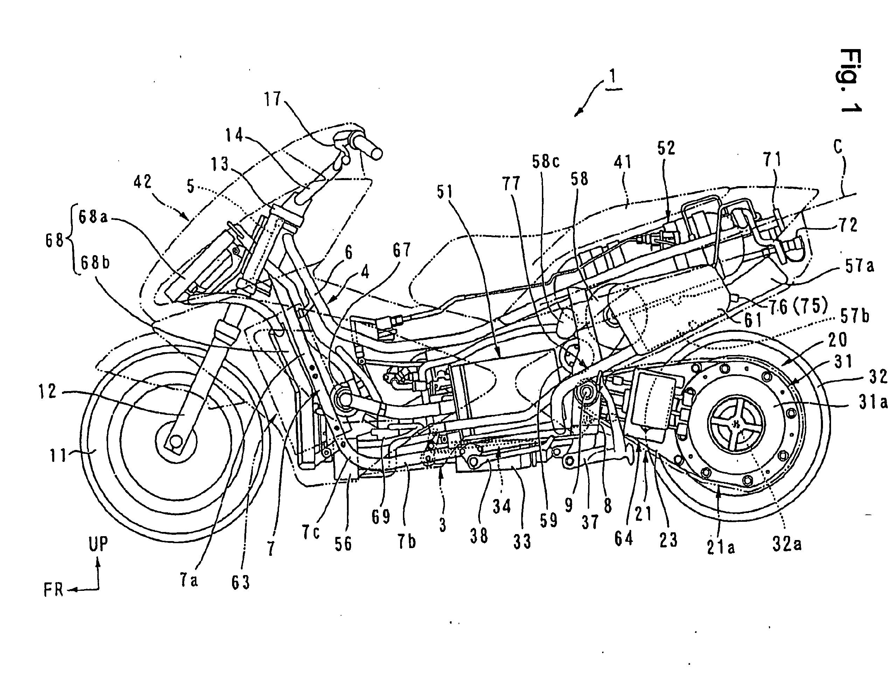

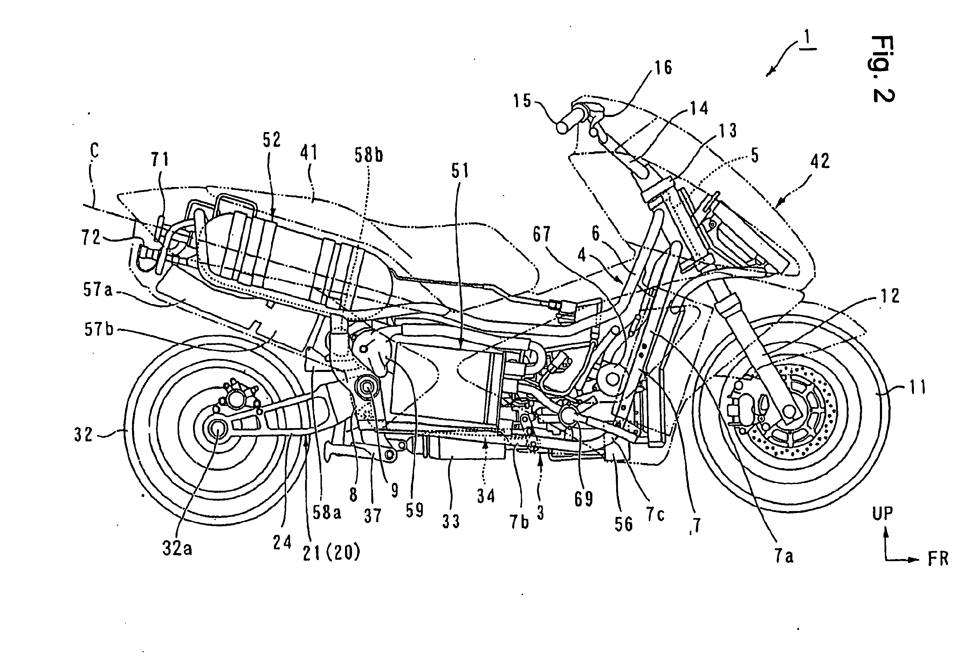

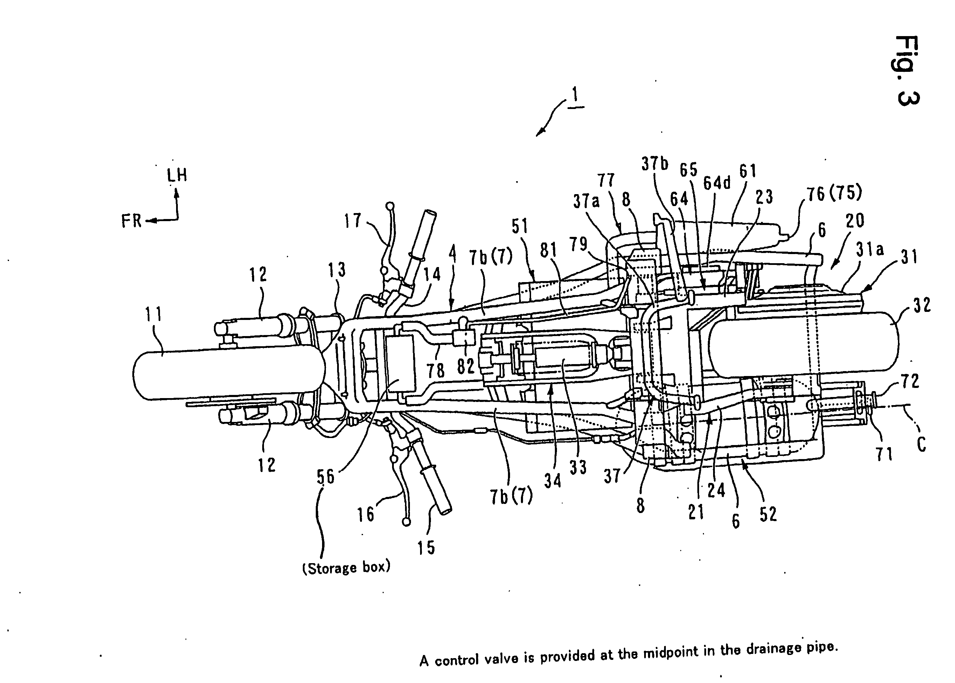

A motorcycle 1 shown in Figs. 1 to 3 is a fuel cell electric vehicle run by driving a motor for driving the vehicle 31 based upon electric power supplied from a fuel cell 51 mounted substantially in the center of the body. The motorcycle 1 is also a scooter-type vehicle provided with a low deck floor part (hereinafter merely called a floor part) 3, the rectangular parallelepipedic fuel cell 51 is arranged in the vicinity of the floor part 3, and the motor 31 as a so-called wheel-in motor is arranged inside a rear wheel 32 which is a driving wheel of the motorcycle 1. The motor 31 is provided with the body of the motor and a deceleration mechanism in a casing 31a, is formed as an integrated unit, and is attached in the wheel from the left side for example in a state in which its output shaft is arranged coaxially with an axle 32a of the rear wheel.

A front wheel 11 of the motorcycle 1 is supported by the lower ends of a pair of right and left front forks 12 and the upside of each front fork 12 is supported by a head pipe 5 at the front end of a body frame 4 via a steering stem 13 so that the front fork can be steered. A handlebar 14 is attached to the upper end of the steering stem 13, a throttle grip 15 is arranged on a right grip of the handlebar 14, and a rear brake lever 16 and a front brake lever 17 are arranged in front of the left and right grips.

A pivot plate 8 extended in a vertical direction of the body is provided to the rear of the body frame 4 and the front end of a rear swing arm 21 is supported via a pivot 9 by a slightly lower part of an intermediate part of the pivot plate 8 so that the side of the rear end can be vertically rocked. A left arm body 23 of the rear swing arm 21 is extended up to the front end of the motor 31 and supports the casing 31a of the motor 31, while a right arm body 24 is extended up to a center position of the rear wheel 32 and supports the axle 32a of the rear wheel. A motor unit 20 as a swing unit of the motorcycle 1 (in other words, as a rear frame for supporting the rear wheel 32 so that the rear wheel can be rocked) is formed mainly by the above-mentioned rear swing arm 21 and the motor 31.

A rear cushion 33 extended longitudinally is arranged under the body frame 4 and under the fuel cell 51. The rear end of the rear cushion 33 is coupled to a lower part of the body frame 4 and the front end of the rear cushion 33 is coupled to a lower part of the motor unit 20 (the rear swing arm 21) via a link mechanism 34. The link mechanism 34 strokes the rear cushion 33 longitudinally according to the vertical rocking of the motor unit 20 so that shock and vibration input to the motor unit 20 are absorbed by the stroke of the rear cushion 33.

The body frame 4 is provided with an upper tube 6 branched toward the right and the left from an upper part of the head pipe 5, extended diagonally backward and downward and extended backward after being bent in height equivalent to a substantial middle in a vertical direction of the body and a down tube 7 branched toward the right and the left from a lower part of the head pipe 5, extended diagonally backward and downward and extended backward after being bent at the lower end of the body, and the rear end of each upper tube 6 and the rear end of the down tube 7 are coupled to the upper end and the lower end of the pivot plate 8 located at the back of the fuel cell 51. Hereinafter, a part of the down tube 7 from the head pipe 5 to a bent part 7c at the lower end of the body will be described as a front side 7a and a part from the bent part 7c to the pivot plate 8 will be described as a lower side 7b.

Each upper tube 6 is extended further backward from the pivot plate 8 toward the rear end of the body and a rear half of each upper tube 6 is used for a seat frame for supporting a seat for occupants 41. A front half of the seat 41 is used for a part for a rider of the motorcycle 1 and a rear half is a part for a rear passenger.

The body of the motorcycle 1 is covered with a body cover 42 mainly made of synthetic resin. The body cover 42 also functions as a windshield and a part forms the floor part 3 together with the body frame 4. A main stand 37 for supporting the body in an upright state is attached to the center of the lower part of the body frame 4 and a side stand 38 for supporting the body in a state in which the body is inclined leftward is attached to the left side of the lower part of the body frame 4.

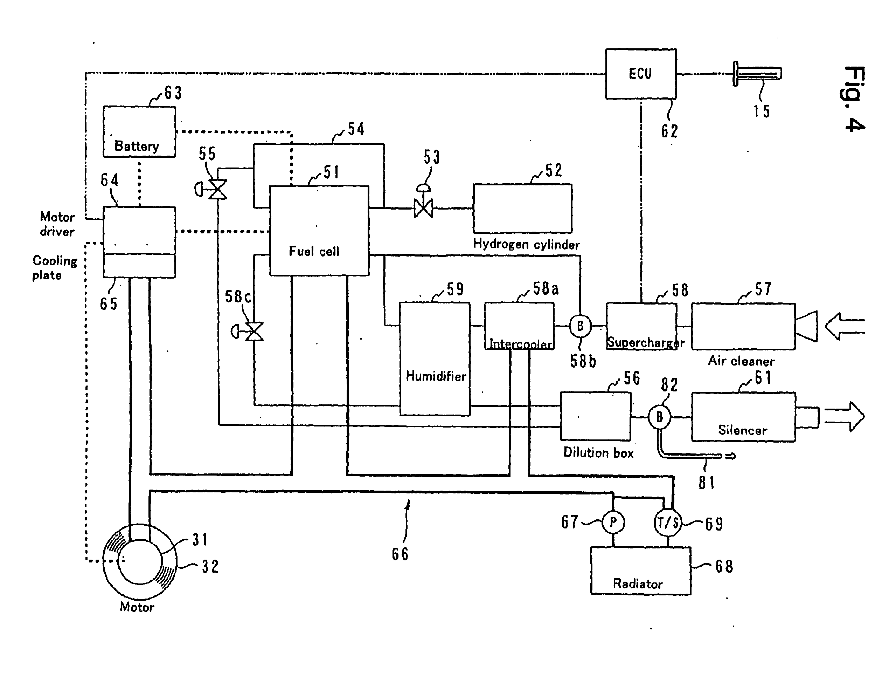

Referring to Fig. 4, the outline of a fuel cell system of the motorcycle 1 will be described below. The fuel cell 51 is a well-known polymer electrolyte fuel cell (PEMFC) acquired by laminating multiple battery modules (battery cells), generates electric power by electrochemical reaction and generates water by supplying gaseous hydrogen to the anode side as fuel gas and supplying air including oxygen to the cathode side as oxidizer gas.

Gaseous hydrogen as fuel gas is supplied from a hydrogen cylinder 52 to the fuel cell 51 via a cut-off valve 53 under predetermined pressure (in other words, in a predetermined high-pressure state) and after the gaseous hydrogen is used for power generation, it is led into a hydrogen circulating passage 54. In the hydrogen circulating passage 54, unreacted gaseous hydrogen is repeatedly supplied to the fuel cell 51 together with fresh gaseous hydrogen from the hydrogen cylinder 52. Gaseous hydrogen circulated in the hydrogen circulating passage 54 can be led into a dilution box (a storage box) 56 via a purging valve 55.

In the meantime, air as oxidizer gas is supplied to the fuel cell 51 in a state pressurized by predetermined pressure after it is led into a supercharger 58 via an air cleaner 57 and is led into the dilution box 56 after it is used for power generation. A reference numeral 58a denotes an inter-cooler for cooling air (oxidizer gas) supplied to the fuel cell 51, 59 denotes a humidifier for supplying moisture to oxidizer gas, 58b denotes a bypass valve for supplying air without passing the inter-cooler 58a and the humidifier 59 when the fuel cell 51 is at low temperature, and 58c denotes a back pressure valve for adjusting the pressure of oxidizer gas in the fuel cell 51.

When the purging valve 55 provided to the hydrogen circulating passage 54 is opened, gaseous hydrogen after reaction is led into the dilution box 56. After gaseous hydrogen stored in the dilution box 56 is mixed with air emitted from the fuel cell 51 and similarly stored in the dilution box 56 and is diluted, it is emitted into the air via a silencer 61.

Water generated in the fuel cell 51 is extracted when it is led into the humidifier 59 together with emitted air and is reutilized for moisture supplied to oxidizer gas. Moisture (for example, water vapor) not extracted into the humidifier 59 is exhausted together with reacted gas via the dilution box 56 or is exhausted via a drainage pipe 81 after the moisture is condensed in the dilution box 56. A control valve 82 for opening or closing its channel at predetermined timing (for example, every predetermined time) is provided to the drainage pipe 81.

The operation of the fuel cell 51 is controlled by an electronic control unit (ECU) 62. Concretely, a signal related to the pressure and the temperature of gaseous hydrogen and oxidizer gas, a signal related to vehicle speed and the number of revolutions of the supercharger 58 and a signal related to the fuel cell 51 and the temperature of its cooling water are input to ECU 62, and the operation of the supercharger 58, the bypass valve 58b, the back pressure valve 58c, the purging valve 55 and the cut-off valve 53 is controlled according to each signal of these.

Besides, an acceleration request signal from the throttle grip 15 is input to ECU 62 and the drive of the motor 31 for driving the rear wheel 32 is controlled according to the signal. The motor 31 is a three-phase motor driven when direct current from the fuel cell 51 or a battery 63 as a secondary battery is supplied after the direct current is converted to three-phase alternating current in a motor driver 64 as an inverter unit.

For a cooling system in the fuel cell system, a cooling channel 66 for making each channel in a water jacket of the fuel cell 51 and the motor 31, in the inter-cooler 58a and in a cooling plate (a cooler) 65 adjacent to the motor driver 64 communicate is formed, and a water pump 67 and a radiator 68 are provided to the cooling channel 66.

In such a cooling system, as cooling water is circulated in the cooling channel 66 by the operation of the water pump 67, heat is absorbed from the fuel cell 51, the motor 31, oxidizer gas and the motor driver 64 and the heat is radiated by the radiator 68. A reference numeral 69 denotes a thermostat for circulating cooling water without passing the radiator 68 when the fuel cell 51 is at low temperature.

To explain referring to Figs. 1 to 3, the hydrogen cylinder 52 is a general high-pressure gas cylinder having cylindrical appearance and is a general compound reservoir made of metal and fiber reinforced plastics. Such a hydrogen cylinder 52 is arranged above the rear wheel 32 and on the right side of the rear of the body so that the axis (the center line) C is longitudinal, detailedly so that the axis C is inclined slightly downward ahead. The hydrogen cylinder 52 at this time is arranged so that the right side end (the outside end) is located slightly outside the outside end of the upper tube 6 on the right side of the body and the left side end (the inside end) is located slightly outside the outside end of the rear wheel 32.

The front and rear ends of the hydrogen cylinder 52 are formed spherically (in other words, in a tapered state) and the hydrogen cylinder is arranged so that the front end is located in front of the pivot plate 8 and the rear end is located at the rear end of the body. At the rear end of the hydrogen cylinder 52, a main tap 71 of the hydrogen cylinder 52 and a hydrogen filling port 72 are arranged.

The upper tube 6 on the left side of the body is inclined backward and slightly upward and is extended substantially linearly backward, while the upper tube 6 on the right side of the body is extended gently downward in the vicinity of the pivot plate 8, compared with the upper tube 6 on the left side of the body. Such each upper tube 6 is gently directed outside in a direction of the width of the body in the vicinity of the pivot plate 8.

Besides, the upper tube 6 on the right side of the body is provided so that the lower end is substantially overlapped with the lower end of the hydrogen cylinder 52 when the body is viewed from the side, is bent upward at the rear end of the body, is bent downward after the upper tube is extended toward the left side of the body to avoid the main tap 71 of the hydrogen cylinder 52 and the hydrogen filling port 72, and is coupled to the rear end of the upper tube 6 on the left side of the body.

The fuel cell 51 is wide in the direction of the width of the body, is vertically flat, and a supply port and an exhaust port of oxidizer gas and gaseous hydrogen, an inlet and an outlet of cooling water are provided to the front wall.

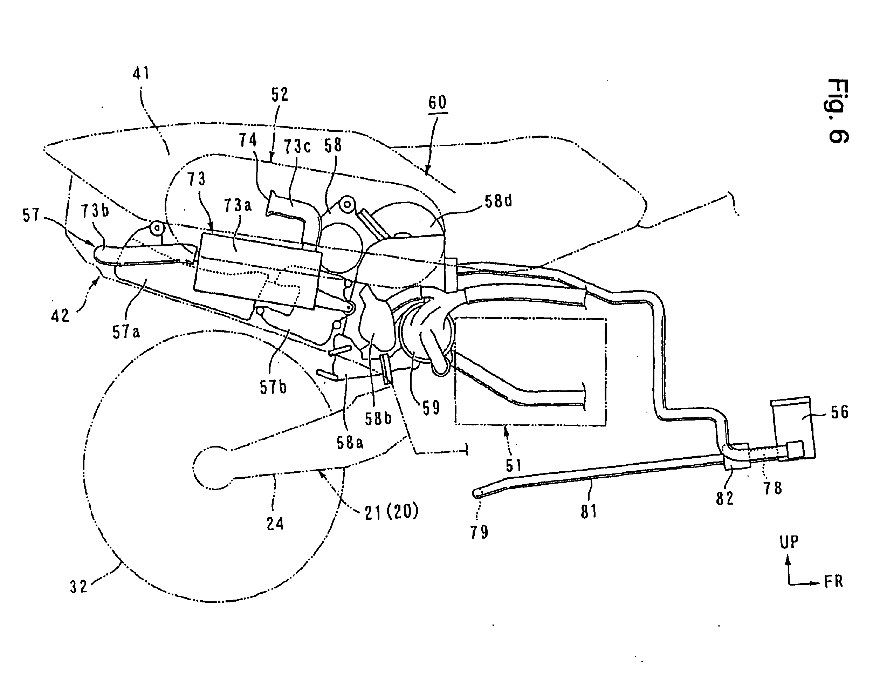

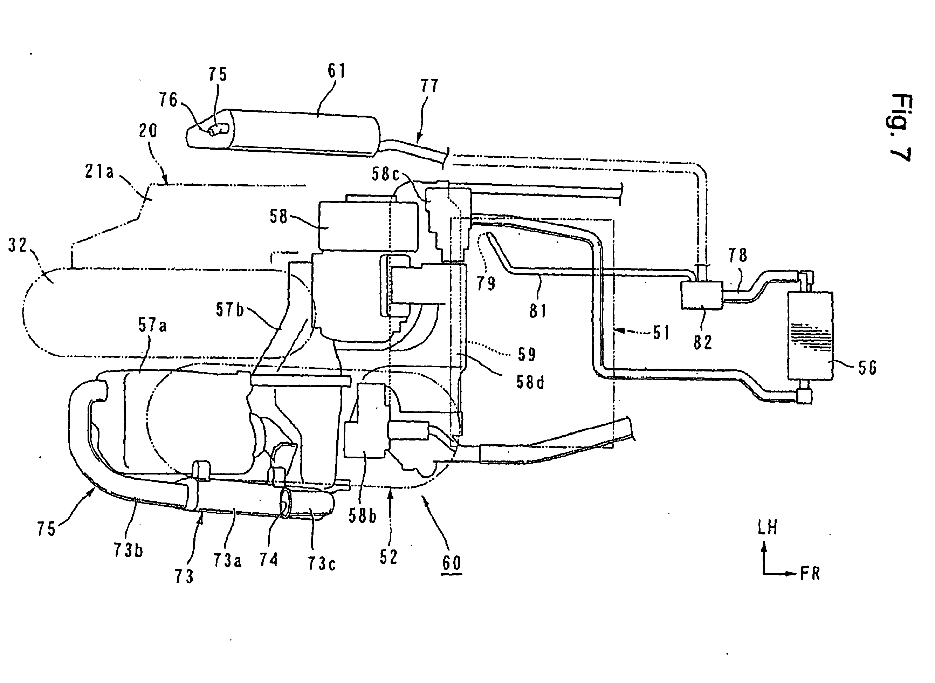

To explain referring to Figs. 6 and 7, the humidifier 59 having the body long in the direction of the width of the body is arranged closely on the upside and at the back of the fuel cell 51. The supercharger 58 is arranged closely on the diagonally upside and at the back of the left side of the humidifier 59 and the left side of an introduction duct 57b extended in the direction of the width of the body is connected to the diagonally lower rear of the supercharger 58. The back pressure valve 58c is arranged closely over the left side of the humidifier 59.

The introduction duct 57b is provided so that the right side is located under the hydrogen cylinder 52 and the front end of an air cleaner case 57a located similarly under the hydrogen cylinder 52 is connected to the right side. An intake duct 73 is connected to the rear end of the air cleaner case 57a and the air cleaner 57 is configured mainly by the intake duct 73, the air cleaner case 57a and the introduction duct 57b.

The intake duct 73 is arranged closely on the right side of the air cleaner case 57a and the introduction duct 57b and is extended longitudinally along these. The intake duct 73 is provided with the body 73a of the duct as a chamber flat in the direction of the width of the body, a connecting tube 73b bent after the connecting tube is extended backward from the rear end of the body 73a of the duct and connected to the rear end of the air cleaner case 57a and an intake nozzle 73c bent backward after the intake nozzle is extended upward from the front side of the upper end of the body 73a of the duct, and the intake nozzle 73c forms a funnel-shaped intake port 74 open toward the back in a position on the upside of the rear wheel 32. The intake port 74 is surrounded by the seat 41 and the body cover 42 and the invasion of a foreign matter such as water, mud and dust is inhibited.

The bypass valve 58b is arranged closely at the back of the right side of the humidifier 59 and the inter-cooler 58a is arranged closely at the diagonally lower back of the bypass valve 58b. The bypass valve 58b and the inter-cooler 58a are arranged so that they are located between the right side of the humidifier 59 and the right side of the introduction duct 57b in a longitudinal direction of the body. One end of a lead-through duct 58d is connected to a squirt hole located in the diagonally upper front of the supercharger 58 and the other end of the lead-through duct 58d is extended rightward, being bent to avoid the front end of the hydrogen cylinder 52 and is connected to an inlet of the inter-cooler 58a.

The silencer 61 flat in the direction of the width of the body is arranged on the left side of the rear of the body so that the silencer is located outside the upper tube 6 on the left side of the body in the direction of the width of the body. The silencer 61 is substantially rectangular when it is viewed from the side of the body and is arranged in a state inclined so that the rear is located higher on the diagonally upper left side of the rear wheel 32. The silencer 61 is provided to a rear half of an exhaust pipe 77 inclined so that the rear is located higher, a tail pipe 75 is protruded backward from the rear end of the silencer 61 (the exhaust pipe 77), and an exhaust port 76 of reacted gas is formed at the rear end of the tail pipe 75.

The silencer 61 (the exhaust pipe 77) is arranged on the left side of the rear wheel 32, while the air cleaner 57 is arranged on the right side of the rear wheel 32. The silencer 61 and the air cleaner 57 are both arranged at the back of the fuel cell 51. The silencer 61 and the air cleaner 57 arranged on the left and on the right with the rear wheel 32 between them in the rear of the body as described above separate the exhaust port 76 and the intake port 74 by a predetermined amount and locate the intake port 74 on the upside by a predetermined amount of the rear wheel 32.

Intake members including the air cleaner 57, the supercharger 58, the bypass valve 58b, the inter-cooler 58a and the humidifier 59 and exhaust members including the back pressure valve 58c and the silencer 61 (the exhaust pipe 77) are mutually arranged closely at the back of the fuel cell 51, that is, in the rear of the body and an intake/exhaust module 60 is formed by integrating each intake member and each exhaust member via a coupling stay not shown and others.

The radiator 68 is divided into a relatively small upper radiator 68a located in front of the head pipe 5 and a relatively large lower radiator 68b located in front of the front side 7a of each down tube 7. The water pump 67 is arranged at the back of the right side of the lower radiator 68b and the thermostat 69 is arranged at the back of the diagonally downside of the water pump 67. The battery 63 flat in the direction of the width of the body is arranged inside each body cover 42 located on both sides of the lower radiator 68b.

The dilution box 56 is arranged between the bent parts 7c of each down tube 7 so that the dilution box is protruded downward from the lower end of the lower side 7b. An exhaust short pipe 78 is led out of the dilution box 56, is connected to the front side of the lower side 7b of the down tube 7 on the left side of the body, and the exhaust pipe 77 is led from the rear side of the lower side 7b. That is, the down tube 7 on the left side of the body forms a part of an exhaust path of reacted gas and therefore, gas exhausted from the dilution box 56 is exhausted into the air via the exhaust short pipe 78, the lower side 7b of the down tube 7 and the exhaust pipe 77.

The drainage pipe 81 is branched from an intermediate part of the exhaust short pipe 78 via the control valve 82 and is extended backward along the lower side 7b of the down tube 7 on the left side of the body. The control valve 82 is closed at normal time for example, closes a waterway of the drainage pipe 81, makes only exhaust gas flow, in the meantime, the control valve is opened only for fixed time at predetermined timing, makes exhaust gas flow, and can exhaust water stored in the dilution box 56 outside the body via the drainage pipe 81.

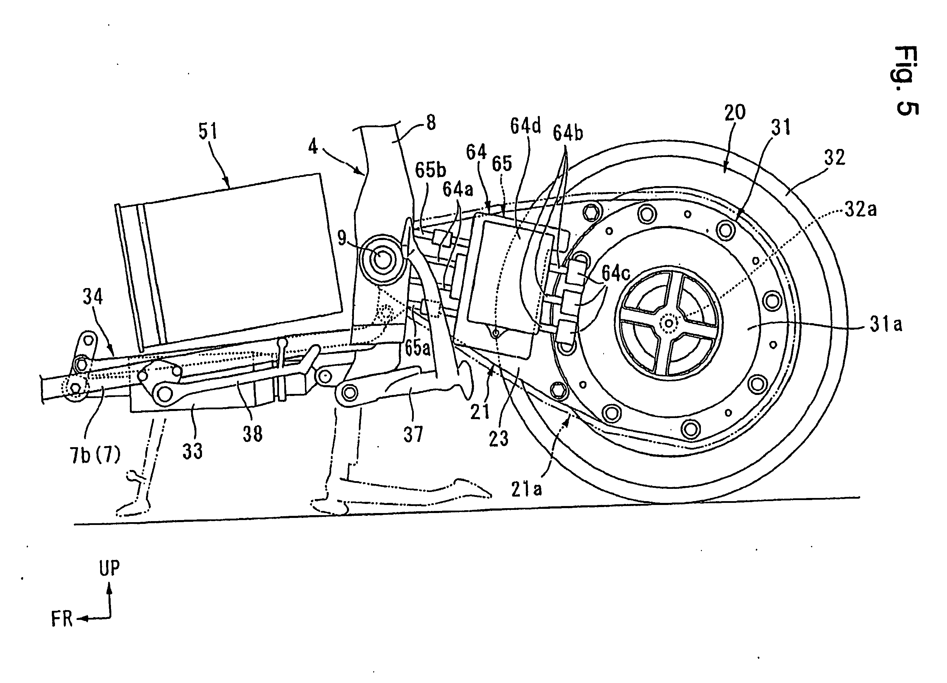

To explain also referring to Fig. 5, the motor driver 64 is substantially rectangular when the body is viewed from the side and is attached to the outside in the direction of the width of the body of the left arm body 23 of the rear swing arm 21 via the cooling plate 65. High-voltage wiring 64a for supplying electric power from the fuel cell 51 and the battery 63 is connected to the front end of the motor driver 64. A feed pipe 65a and a drainage pipe 65b which are a part of the cooling channel 66 are connected to a lower part and an upper part of the front end of the cooling plate 65.

Three-phase high-voltage wirings 64b are led out from the rear end of the motor driver 64 and each-phase high-voltage wiring 64b is connected to a feeding terminal at the front end of the motor 31 located immediately at the back of the motor driver 64. That is, the motor driver 64 is arranged close to the motor 31 to an extent that the motor driver is not overlapped with the motor when the body is viewed from the side. A reference numeral 64c denotes a current sensor provided to each-phase high-voltage wiring 64b for detecting an amount of current fed to the motor 31 and 64d denotes a voltage smoothing capacitor as a part of the motor driver 64.

An arm cover 21a as a part of the rear swing arm 21 is mounted on the motor unit 20. The arm cover 21a covers the motor driver 64, the cooling plate 65, the voltage smoothing capacitor 64d, each high-voltage wiring 64a, 64b, the feed pipe 65a, the drainage pipe 65b and current sensor 64c together with rear swing arm 21 and the motor 31 and suitably protects them. A fresh-air inlet and a fresh-air outlet not shown are provided to the arm cover 21a so that outside air can be circulated inside the arm cover 21a.

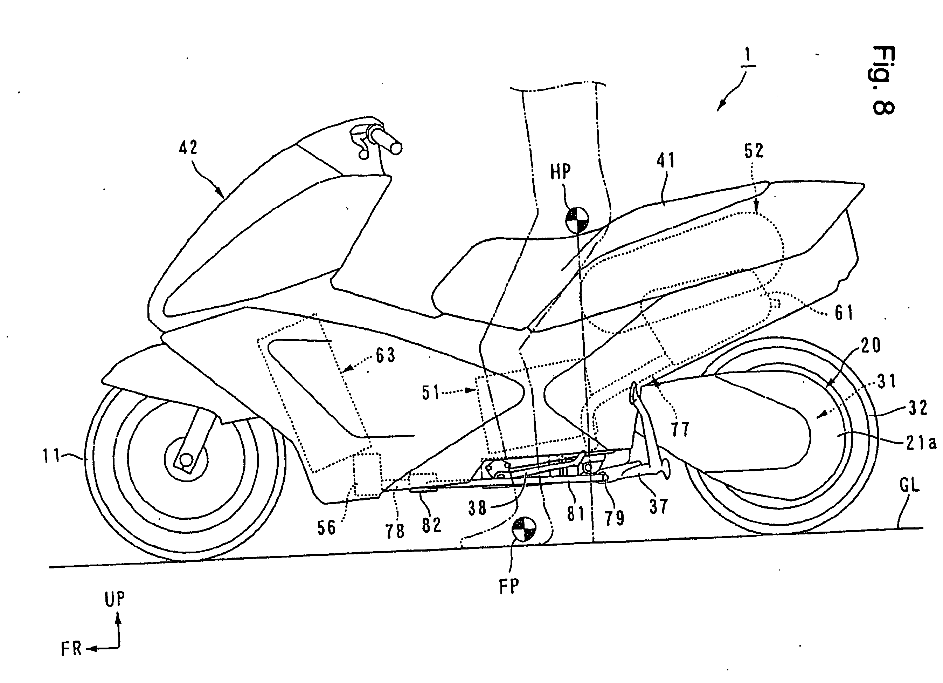

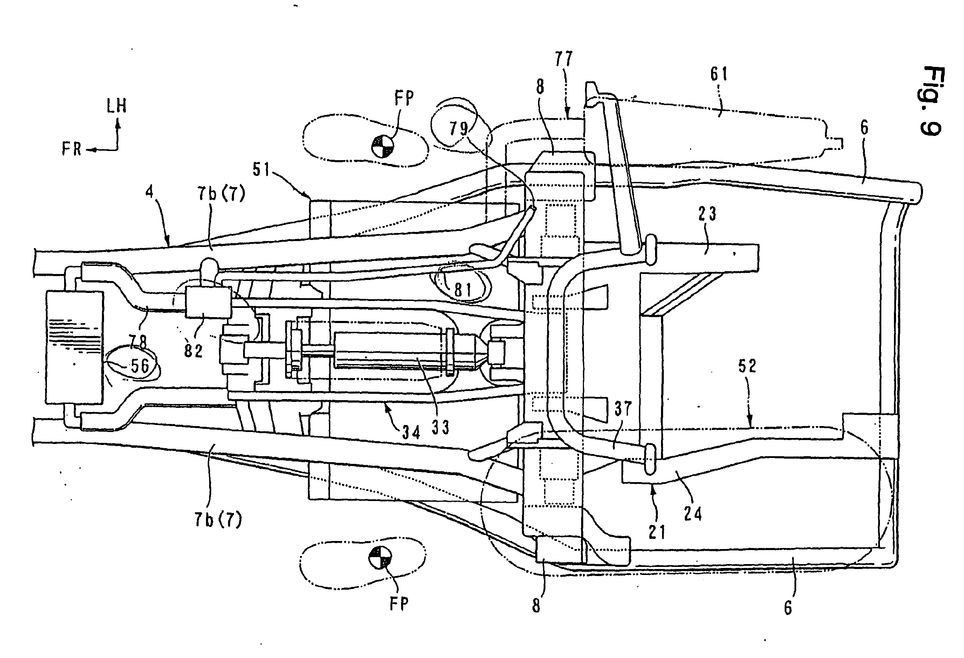

As shown in Figs. 8 and 9, the drainage pipe 81 is bent toward the diagonally rear left side in a position in which the rear is substantially overlapped in the longitudinal direction with a rider's seated reference position (hereinafter merely called a seated position) HP of the seat 41, locates the scupper 79 which is an opening at its rear end at the back of the seated position and on the left side of the body, that is, on the side of the side stand 38, and makes the scupper 79 open toward the diagonally rear left side.

A code FP denotes a reference position (hereinafter merely called the position of a foot) when the rider seated on the seat 41 puts his/her foot on the ground (shown by a line GL) while the vehicle is stopped and the position of the foot FP is located in front of the seated position HP, that is, in front of the scupper 79.

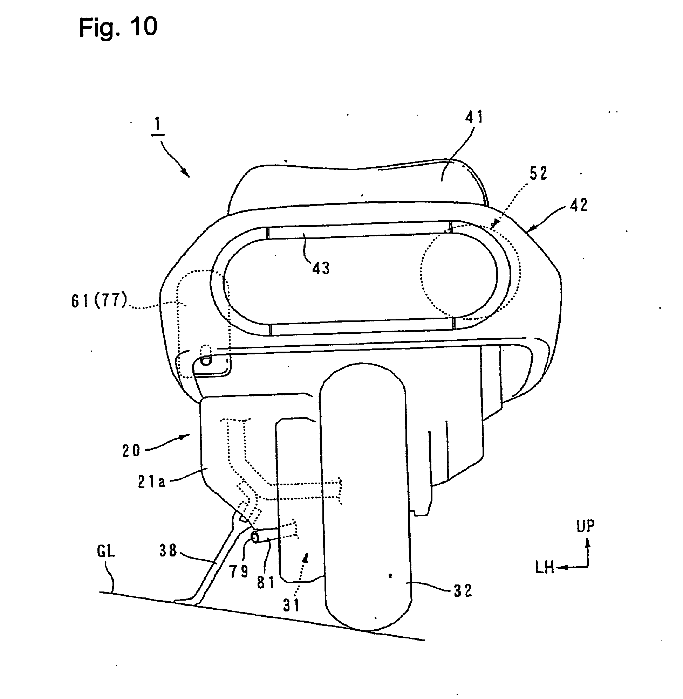

Further, as shown in Fig. 10, when the motorcycle 1 is supported by the side stand 38 in a state in which the body is inclined on the left side, the scupper 79 is open toward the diagonally left downside, water in the drainage pipe 81 is easily exhausted, and the invasion of rainwater and others into the drainage pipe is prevented. A reference numeral 43 denotes a substantially elliptic tail lamp without an end when the body is viewed from the rear.

According to this configuration, the exhaust pipe 77 provided with silencer 61 is led out of the dilution box 56 separately from the drainage pipe 81, emission gas in the dilution box 56 is exhausted into the air using the exhaust pipe 77, and only generated water in the dilution box 56 can be exhausted using the drainage pipe 81 and at predetermined timing. That is, gas exhausted from the fuel cell 51 can be exhausted into the air via the silencer 61 and generated water from the fuel cell 51 can be moderately exhausted.

At this time, as generated water led by the drainage pipe 81 is exhausted toward the side of the body from the scupper 79, it can be reduced that the generated water is splashed on the rear wheel 32 which is a driving wheel.

In the above-mentioned drainage structure, as the scupper 79 is located at the back of the seated position HP of the motorcycle 1 which is a saddle-ride type vehicle, drainage is made at the back of the position of a foot FP located in front of the seated position HP and it can be reduced that exhausted generated water is splashed on the rider's foot.

Further, in the drainage structure, as the scupper 79 is arranged on the side (the left side of the body) on which the side stand 38 is provided, generated water in the drainage pipe 81 is also easily exhausted from the scupper 79 when the body is supported in an inclined state by the side stand 38 while the vehicle is stopped. That is, drainability when the vehicle is stopped can be enhanced.

The configuration in the above-mentioned embodiment is an example, it is natural that the configuration is not limited to application to a motorcycle, and it need scarcely be said that various modifications are allowed in a range which does not deviate from the scope of the invention as defined by the appended claims.

## Claims

1. A fuel cell electric vehicle (31) provided with a fuel cell (51) adapted to generate electric power by reacting hydrogen and oxygen, a hydrogen cylinder (52) adapted to supply gaseous hydrogen to the fuel cell (51), and a drainage structure comprising a drainage pipe (81) adapted to drain water and a scupper (79) provided to the drainage pipe (81) and open toward the side of the vehicle body, wherein:
a control valve (82) that opens or closes at predetermined timing is arranged on the drainage pipe (81),
**characterized in that** a storage box (56) adapted to store gas emitted from the fuel cell (51) and generated water is provided, wherein an exhaust short pipe (78) adapted to exhaust gas and generated water leads out from the storage box (56), and the drainage pipe is branched off from an intermediate part of the exhaust short pipe.

2. The fuel cell electric vehicle (31) according to claim 1, wherein:
the scupper (79) is located at the back of the position of a seat (41) of the vehicle (31).

3. The fuel cell electric vehicle (31) according to claim 1 or 2, comprising:
a side stand (38) for supporting the body in a state inclined on one side, wherein:
the scupper (79) is arranged on the side on which the side stand (38) is provided.

4. Method for draining a fuel cell (51), comprising the steps:
storing gas emitted from the fuel cell (51) and water generated in the fuel cell (51) in a storage box,
draining water from the storage box (56) via a drainage pipe (81), a scupper (79) provided on the drainage pipe (81) and open toward the side of a vehicle body and a control valve (82) that opens or closes at predetermined timing and is arranged on the drainage pipe (81), wherein the control valve (82) is closed at a normal time thereby only allowing the flow of exhaust gas and is opened at a predetermined time thereby allowing the flow of exhaust gas and draining generated water.

## Patentansprüche

1. Brennstoffzellen-Elektrofahrzeug (31), versehen mit einer Brennstoffzelle (51), die dazu ausgelegt ist, durch Reaktion von Wasserstoff und Sauerstoff elektrischen Strom zu erzeugen, einer Wasserstoffflasche (52), die dazu ausgelegt ist, der Brennstoffzelle (51) gasförmigen Wasserstoff zuzuführen, sowie einer Drainagestruktur, die ein Drainagerohr (81), das zum Drainieren von Wasser ausgelegt ist, sowie einen Auslauf (79), der an dem Drainagerohr (81) vorgesehen ist und sich zur Seite des Fahrzeugrumpfs hin öffnet, aufweist, worin:
an dem Drainagerohr (81) ein Steuerventil (82) angeordnet ist, das mit einer vorbestimmten Zeitgebung öffnet oder schließt,
**dadurch gekennzeichnet, dass** ein Speicherkasten (56) vorgesehen ist, der dazu ausgelegt ist, von der Brennstoffzelle (51) abgegebenes Gas und erzeugtes Wasser zu speichern, worin ein kurzes Auslassrohr (78) dazu ausgelegt ist, Abgas und erzeugtes Wasser aus dem Speicherkasten (56) abzuleiten, und das Drainagerohr von einem zwischenliegenden Teil des kurzen Auslassrohrs abzweigt.

2. Brennstoffzellen-Elektrofahrzeug (31) nach Anspruch 1, worin der Ablauf (79) hinter der Position des Sitzes (41) des Fahrzeugs (31) angeordnet ist.

3. Brennstoffzellen-Elektrofahrzeug (31) nach Anspruch 1 oder 2, das einen Seitenständer (38) aufweist, um den Rumpf in einem zur einen Seite geneigten Zustand zu stützen, worin:
der Auslauf (79) an der Seite angeordnet ist, an der der Seitenständer (38) vorgesehen ist.

4. Verfahren zum Drainieren einer Brennstoffzelle (51), welches die Schritte umfasst:
Speichern von von der Brennstoffzelle (51) abgegebenem Gas und in der Brennstoffzelle (51) erzeugtem Wasser in einem Speicherkasten; Drainieren von Wasser von dem Speicherkasten (56) über ein Drainagerohr (81), einen Auslauf (79), der an dem Drainagerohr (81) vorgesehen ist und sich zur Seite eines Fahrzeugrumpfs hin öffnet, sowie ein Steuerventil (82), das mit einer vorbestimmten Zeitgebung öffnet oder schließt und an dem Drainagerohr (81) angeordnet ist, worin das Steuerventil (82) normalerweise geschlossen ist, um hierdurch nur den Fluss des Abgases zu erlauben, und mit einer vorbestimmten Zeitgebung geöffnet wird, um hierdurch den Fluss des Abgases zu erlauben und das erzeugte Wasser zu drainieren.

## Revendications

1. Véhicule électrique à pile à combustible (31) pourvu d'une pile à combustible (51) adaptée pour générer de l'énergie électrique en faisant réagir de l'hydrogène et de l'oxygène, d'un cylindre d'hydrogène (52) adapté pour délivrer de l'hydrogène gazeux à la pile à combustible (51), et une structure d'évacuation comprenant un tuyau d'évacuation (81) adapté pour évacuer l'eau et une saignée (79) prévue sur le tuyau d'évacuation (81) et ouverte vers le côté de la carrosserie de véhicule, où :
une soupape de commande (82) qui s'ouvre et se ferme à une chronologie prédéterminée est agencée sur le tuyau d'évacuation (81),
**caractérisé en ce qu'**une boîte de stockage (56) adaptée pour stocker un gaz émis depuis la pile à combustible (51) et l'eau générée est prévue, dans lequel un tuyau court d'échappement (78) adapté pour évacuer le gaz et l'eau générée mène vers l'extérieur de la boîte de stockage (56), et le tuyau d'évacuation bifurque depuis une partie intermédiaire du tuyau court d'échappement.

2. Véhicule électrique à pile à combustible (31) selon la revendication 1, dans lequel :
la saignée (79) est située à l'arrière de la position d'un siège (41) du véhicule (31).

3. Véhicule électrique à pile à combustible (31) selon la revendication 1 ou 2, comprenant :
un montant latéral (38) destiné à supporter la carrosserie dans un état incliné sur un côté, dans lequel :
la saignée (79) est agencée du côté où le montant latéral (38) est disposé.

4. Procédé pour drainer une pile à combustible (51), comprenant les étampes :
de stockage d'un gaz émis depuis la pile à combustible (51) et de l'eau générée dans la pile à combustible (51) dans une boîte de stockage,
d'évacuation de l'eau provenant de la boîte de stockage (56) par l'intermédiaire d'un tuyau d'évacuation (81), une saignée (79) étant prévue sur le tuyau d'évacuation (81) et ouverte vers le côté d'une carrosserie de véhicule et une soupape de commande (82) qui s'ouvre ou se ferme à une chronologie prédéterminée et est agencée sur le tuyau d'évacuation (81), où la soupape de commande (82) est fermée à un moment normal ne permettant ainsi que l'écoulement du gaz d'échappement et est ouverte à un moment prédéterminé permettant ainsi l'écoulement du gaz d'échappement et l'évacuation de l'eau générée.
